# EUROPEAN PATENT APPLICATION

(11) **EP 1 157 780 A1**
(43) Date of publication of application: **28.11.2001**
(21) Application number: 01201935.2
(22) Date of filing: 23.05.2001
(51) Int. Cl.: B23Q 7/14, B65G 35/06

(54) **A system for conveying products on product carriers**

(30) Priority: 26.05.2000 NL 1015315
(71) Applicant: Integrated Production and Test Engineering N.V., 3530 Houthalen-Helchteren (BE)
(72) Inventor: Raemakers, Paul Peter Johan Marcel, 3530 vHouthalen-Helchteren (BE); Vandebroek, Marcel, 3530 vHouthalen-Helchteren (BE); Hofmann, Peter, 3530 vHouthalen-Helchteren (BE); Minschart, Johan, 3530 vHouthalen-Helchteren (BE)
(74) Representative: Valkonet, Rutger

(57) **Abstract**

The invention relates to a system for conveying one or more products on product carriers (20) to and from one or more processing stations which are each suitable for subjecting said products to one or more different, predetermined operations, such as assembling, testing and the like, which stations are incorporated in a conveying circuit which is built up of linked-up conveying units, which each include a conveyor comprising at least one assembly built up in part of an endless conveying element (7A,7B) which is passed over spaced-apart, drivable rollers (6A,6B,6C), over which conveying element (7) the product carriers (20) can be transported by means of friction.

According to the invention, said product carrier (20) is fitted with means (21,22) which reduce the amount of friction between the product carrier (20) and the conveying element (7A,7B) during operation.

The invention furthermore relates to a product carrier (20) according to the invention.

## Description

The invention relates to a system for conveying one or more products on product carriers to and from one or more processing stations which are each suitable for subjecting said products to one or more different, predetermined operations, such as assembling, testing and the like, which stations are incorporated in a conveying circuit which is built up of linked-up conveying units, which each include a conveyor comprising at least one assembly built up in part of an endless conveying element which is passed over spaced-apart, drivable rollers, over which conveying element the product carriers can be transported by means of friction.

The invention furthermore relates to a product carrier according to the invention.

Such a system is known, for example, from European patent publication EP-B-0 088 680. In this system, a product carrier is supported on the continuously driven conveying element, wherein said product carrier, with a product present thereon, is moved through the system under the influence of friction. The product carrier needs to be stationary for a specific period of time during its transport through the conveying circuit, and also in the processing stations, for example in order for various operations to be carried out on the product. To this end, the product carrier is blocked relative to the moving conveying element.

Since the conveying element of such a system is driven continuously, it meets with an extreme amount of friction when the product carrier is being blocked, which not only leads to the development of play, but which furthermore leads to a significant reduction of the life of the conveying element. Life-reducing stresses are furthermore set up in the conveying elements during the regular starting and slowing down of the movement of the product carrier, which, in combination with the play that has developed, result in jolting transport of the product carrier through the system. Said latter effects not only lead to a slower and less accurate transport of the carriers, but in addition damage may be caused to the products that are present on the product carrier, which products frequently contain sensitive electronic components.

The object of the present invention is to overcome the above drawbacks and to provide a conveying system and a carrier which enable a quick, smooth but above all accurate transport of the product carrier through the system, as a result of which also the life of the conveying element is significantly extended.

In accordance with the invention, the conveying system is to that end characterized in that the product carrier is fitted with means which reduce the amount of friction between the product carrier and the conveying element during operation. More in particular, said means are mounted at those places where the product carrier is supported on the conveying element. In a very functional embodiment, said means consist of wheels, wherein the wheel surface of each wheel may extend above the product carrier surface remote from the conveying element.

In another embodiment, the conveying system is according to the invention characterized in that said means consist of balls which are freely movable in a bearing housing. According to the invention, a further reduction of the friction between the product carrier and the conveying system can be obtained in that the product carrier is fitted with a further wheel near each corner point, which wheel extends beyond said corner point, wherein the axis of rotation of said wheel extends perpendicularly to the plane of the product carrier.

A smooth transport of the product carrier through the conveying system can be effected in that the system is according to the invention characterized in that at least one conveying unit includes means for at least slowing down a passing product carrier. Said means may thereby comprise at least one stop element fitted with a projection, which projection can move into and out of the plane of transport. In a specific embodiment, said projection extends into a slot formed in a side of the product carrier that faces towards the conveying element, which slot includes an upright edge.

In order to prevent jolting movement against the direction of transport of a product carrier slowed down by a projection and thus damage being caused to the conveying element and to the product present on the product carrier, the stop element is also fitted with a pin positioned before said projection, seen in the direction of transport, which pin can be moved into and out of the plane of transport simultaneously with the projection. The pin may be movable against a rebound force.

An embodiment wherein the velocity of the product carrier can be reduced in an effective manner is characterized in that said means furthermore comprise at least two strip-shaped elements extending in the direction of transport of the product carrier, which elements can be moved into contact with the wheel or ball surfaces that extend above the surface of the product carrier remote from the conveying element during operation, wherein the strip-shaped elements are each mounted just above a conveying element.

The invention furthermore relates to a conveying system wherein said conveying circuit includes at least one conveying unit which is suitable for moving a product carrier in a direction transversely to its previous direction of transport. In order to obtain a conveying system which provides quick and accurate cross transport of a product carrier and which furthermore requires little overall space, said cross conveying unit is according to the invention characterized in that the plane of transport of said cross transport unit partially lies below the plane of transport of the directly adjacent transport unit, and in that said plane of transport can be moved to a level above said latter plane of transport.

A very compact cross conveying system is obtained in that the conveying element of the cross conveying unit is passed over additional guide rollers under the conveying element of the directly adjacent conveying unit at said conveying element.

According to the invention, one conveying unit furthermore comprises means for rotating the product carrier. This makes it possible to reposition the product carrier carrying the product temporarily, for example in order for specific operations to be carried out at the processing stations. This possibility of rotation is quite useful, because it makes it possible to carry out specific operations more easily and more quickly, or because the temporarily rotated position enables easier access to the product. In order to provide a proper fixation during said rotation, the rotatable support includes at least two upright pins, which extend into openings or slots formed in the side of the product carrier that faces towards the conveying element. Preferably said rotation takes place through 90° or 180°.

In accordance with the invention, the conveying system can be characterized in that the conveying element of at least one conveying unit describes a bend in the plane of transport. In order to provide proper guidance for the conveying element, the conveying element runs over guide rollers disposed in the inside bend. In order to prevent the product carrier from being decelerated due to friction or from being blocked in the bend, the inside and the outside bend of the plane of transport have upright edges, which co-operate with the wheels that are present in each corner of the product carrier.

The invention furthermore relates to a cross conveying unit according to the description, the claims and the drawings. The invention also relates to a rotatable conveying unit and a conveying unit including a bend according to the description, the claims and the drawings of the present application.

Above all, the invention relates to a product carrier as described in the present application.

Furthermore it is noted that European patent publication no. 0 223 683 also discloses a conveying system wherein the product carrier is fitted with wheels which can swivel through 360°. Said wheels support the product carrier on a fixed base of the conveying unit. The transport of the product carrier through the conveying system thereby takes place under the influence of friction between the product carrier and a driven conveying element which is disposed beside the path of transport.

In addition to that, European patent specification no. 0 514 241 discloses a motorized product carrier, which is movable on wheels and which furthermore comprises a motor for driving a conveying element which is supported by several guide rollers, which are likewise mounted on the product carrier. The self-propelling product carrier moves under the influence of friction between the conveying element and an upright side edge of the conveying circuit of the conveying system.

In contrast to the prior art constructions as disclosed in the aforesaid patent publications, the essence of the present invention is the frictionless interaction between the conveying elements and the product carrier, a specific embodiment of which is fitted with wheels, during situations wherein the movement of the product carrier must be interrupted - whether or not temporarily. Although the conveying elements are still being driven in such situations, the frictionless interaction does not lead to damage to the conveying element or a reduced life span of said conveying element. As a result, it is not necessary to stop and start the drive of the conveying elements in question each time the transport of a product carrier is interrupted (temporarily), but a simple, continuously operating driving unit will suffice, for example an electric motor running at a standard speed. Thus, there is no need for complicated, controllable and thus expensive driving means for driving each individual conveying element in the conveying system.

The invention will now be explained in more detail with reference to a drawing, which successively shows in:
Figure 1 an embodiment of a conveying unit for use in a conveying system according to the invention;
Figure 2 a side view of Figure 1;
Figure 3 another embodiment of a conveying unit for use in a conveying system according to the invention;
Figure 4 yet another embodiment of a conveying unit for use in a conveying system according to the invention;
Figure 5 an embodiment of a product carrier according to the invention; and in
Figures 6a and 6b further elaborated parts of the conveying system according to the invention.

Parts corresponding to each other are indicated by the same numerals in the figures; the numerals between brackets refer to the conveyor in question.

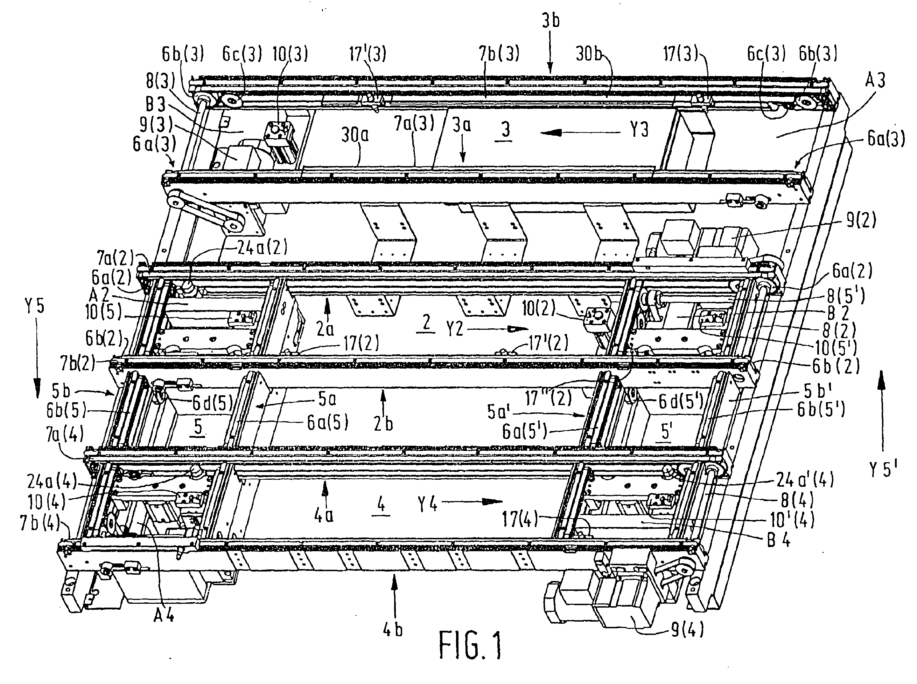

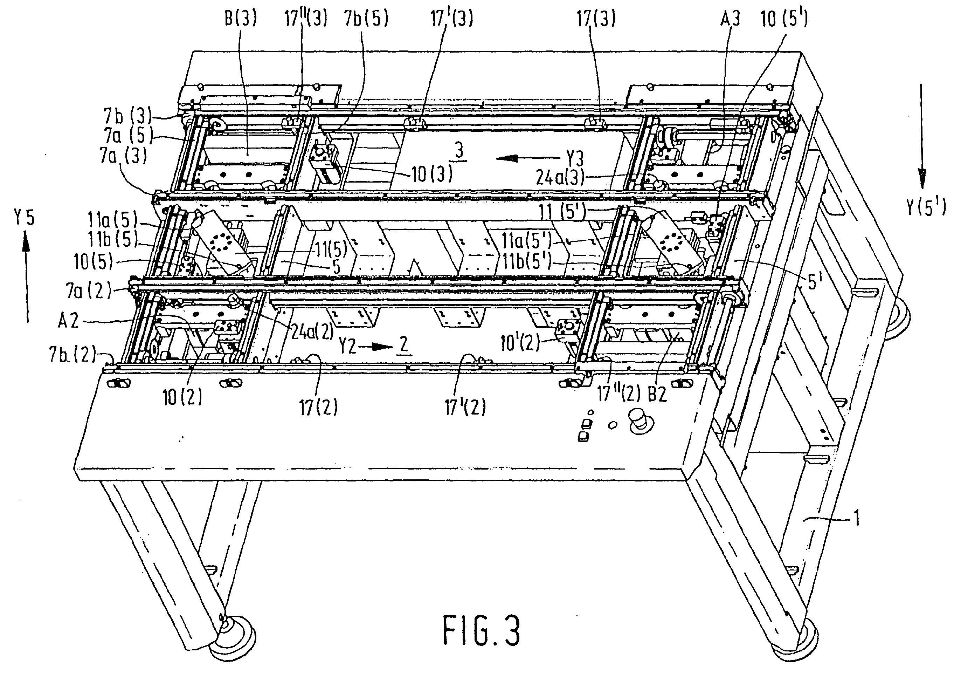

Figure 1 shows an embodiment of a conveying unit which can be included in the conveying circuit of a conveying system according to the invention. The standard embodiment of such a conveying unit consists of two conveyors 2 and 3, which are mounted in a frame 1, as is shown in Figure 3. Each conveyor 2, 3 is built up of a pair of assemblies (2a, 2b and 3a, 3b, respectively). Each assembly comprises an endless conveying element 7, which runs over a number of rollers 6a, 6b, 6c. Both endless conveying elements 7a and 7b of each conveyor 2, 3 can be driven by means of a motor 9 and a shaft 8 that is connected thereto. Said drivable endless conveying elements 7a and 7b thus form a plane of transport, over which product carriers carrying a product can be transported.

The conveyor 2 forms part of the supply line of the conveying system according to the invention, whilst conveyor 3 is incorporated in the discharge line or return line of the conveying system. The conveying circuit consists of several conveying units 2 and 3, which are connected in series. This implies that a product carrier 20 to be transported over the conveying elements 7a(3), 7b(3) is taken over near section A3 by the conveyor 3 of a conveyor 3' disposed therebefore, which in turn transfers the product carrier 20 in section B3 in the direction of transport Y3 to section A3 of a next conveyor 3''. Likewise, conveyor 2 can receive a product carrier 20 in section A2, which product carrier is supplied by other conveyor 2'', which are disposed before the conveyor 2, seen in the direction of transport. The product carrier leaves the conveyor 2 near section B2 in the direction of transport Y2.

The products to be transported through the system are usually electronic printed circuits or electronic equipment, which are (is) to undergo various operations. Such operations, for example the carrying out of a test or the mounting of an electronic component, takes place in a processing station which is suitable for that purpose, which is included in the conveying system. To that end, each product is transported to a next processing station, until the product has undergone all the operations and is carried out of the conveying system via discharge or return line 3.

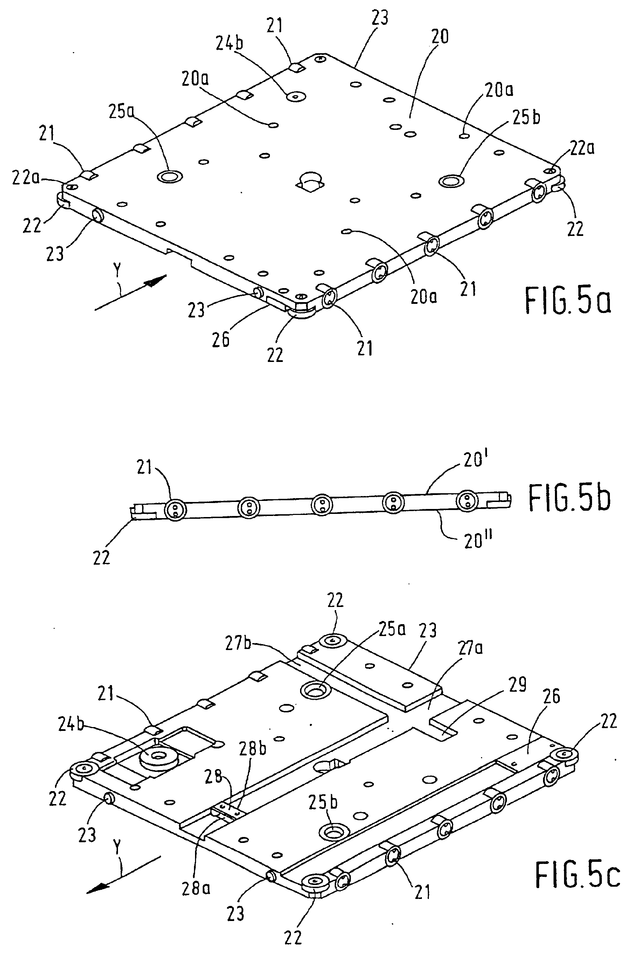

Each product to be processed is present on a product carrier according to the invention. Such a product carrier according to the invention is shown in Figures 5a - 5c, for example. The product carrier 20 is rectangular in shape, for example, and has a large number of bores 20a formed therein, which bores function to centre and position a product to be processed, using additional, generally known means, with respect to the conveying system. During transport of the product carrier 20 with a product present thereon, said product carrier 20 is supported on the two endless conveying elements 7a, 7b of each conveyor.

In the current conveying systems, the product carrier 20 is transported through the system under the influence of friction between the carrier and the endless conveying element. Since the current product carriers must remain stationary at the processing stations for a specific period of time, for example in order for the product to undergo an operation, the amount of friction between the continuously driven conveying elements and the bottom surface of the product carrier is extreme. Not only does this lead to a reduced life of the conveying elements, but in addition all this leads to a jolting transport of the product carrier through the system. Furthermore, play develops in the conveying elements, which seriously interferes with an exact positioning of the product carriers in the system.

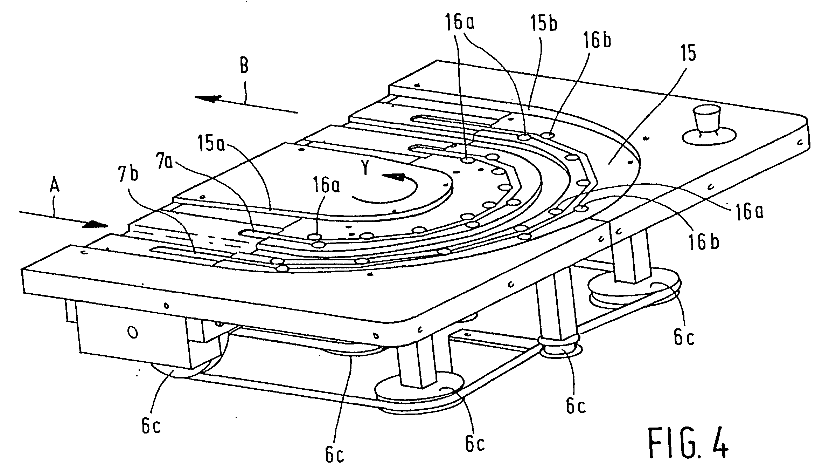

In order to reduce the amount of friction between the product carriers 20 and the various conveying elements 7a, 7b, the product carrier 20 is according to the invention fitted with wheels 21, which are mounted in the side edges of the product carrier, seen in the direction of transport. Wheels 21 are supported on the conveying elements 7a and 7b. As is shown in Figure 5b, the wheel surface of each wheel 21 extends beyond the upper side 20' and the bottom side 20'' of the product carrier. Furthermore, each product carrier 20 is fitted with further wheels 22 near its corner points, whose axis of rotation 22a extends perpendicularly to the plane 20' of the product carrier. The function of said corner wheels 22 will be explained in more detail hereafter in combination with Figure 4.

To prevent collisions with product carriers in front or behind, each product carrier 20 is fitted with shock-damping means 23 consisting of a rubber stop.

Product carrier 20 is furthermore provided with a writable and readable data carrier 24b. Said data carrier 24b can contain all sorts of data relating to the product present on product carrier 20, which data can be read by reading sensors 24a at various locations during its transport through the conveying system, and be updated in dependence on the finished operation in a processing station. In addition to that, each product carrier is fitted with a strip of detection material 26 on its bottom side 20', which enables sensors 17 to detect the presence of said product carrier. Said sensors 17 are disposed at strategic positions beside a conveying element 7a or 7b.

The detection of the presence of a passing product carrier 20 by sensors 17 can be used, for example, for energizing a stop element 10, by means of which the movement of the product carrier 20 can be slowed down or interrupted temporarily. Such a stop element 10 may also be disposed at specific positions in the conveying system, and more in particular it is disposed at every entry section A and exit section B of each conveyor.

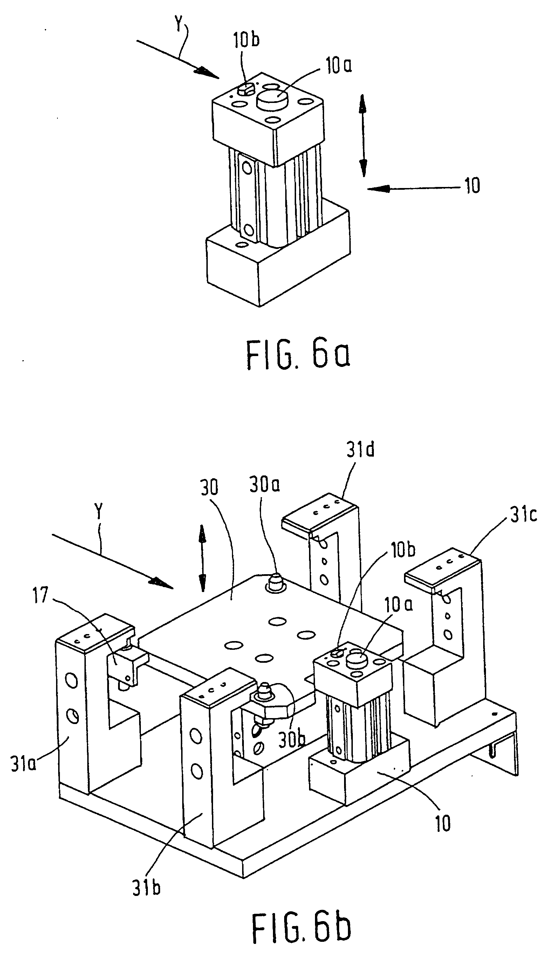

Figure 6a shows a stop element according to the invention, which comprises a projection 10a, which can be moved into and out of the plane of transport of each conveyor, which is formed by conveying elements 7a and 7b, in a manner which is known per se, for example servo-pneumatically. When the projection 10a has been moved in the plane of transport, it will extend into slot 27a that is formed in the bottom surface 20'' of the product carrier 20 (Figure 5c). Slot 27a has an upright edge 28, against which the projection 10a comes to abut, thus stopping the further transport of the product carrier 20 through the conveying system. In order to avoid overly violent contact between projection 10a and upright edge 28, the stop surface of edge 28 is provided with a damping material 28a.

In order to prevent the product carrier 20 from making a jolting backward movement as a result of being blocked by projection 10a, thus causing damage to the product that is present on product carrier 20, stop element 10 includes a second pin 10b, which can be moved into and out of the plane of transport of conveying elements 7a and 7b simultaneously with projection 10a. Pin 10b can be moved up and down against a rebound force, of a spring, for example, so that pin 10b is depressed by stop 28a upon passage of the product carrier 20 in the direction of transport Y to shoot up into the plane of transport again upon passage of the upright edge 28. Possible jolting backward movement of the product carrier resulting from the contact between projection 10a and the edge 28 is now prevented in that pin 10b will abut against the rear stop surface 28b of the upright edge 28.

In spite of the fact that the product carrier 20 is now fixed at a specific position in the system, the conveying elements 7a and 7b on which the product carrier 20 is supported experience no friction, since the two conveying elements now drive the wheels 21 without any friction. As a result of the absence of friction between a blocked product carrier and the conveying elements 7a and 7b, the life of the conveying elements is significantly extended.

Further transport of the product carrier 20 takes place by moving the stop element 10 (and projection 10a and pin 10b) out of the plane of transport. The acceleration of the product carrier on the conveying elements 7a and 7b will take place gradually rather than abruptly, since there is still some slip between the conveying elements and the wheels 21, which are still turning. Due to the weight (read "mass inertia") of the product carrier, said slip gradually decreases until the wheels no longer turn and the product carrier 20 is being conveyed by the conveying elements again. The above friction-reducing effects result in a longer life of the conveying elements, and they furthermore reduce the extent to which play develops in said conveying elements. Within this framework, jolting transport of the product carrier is a thing of the past, whilst furthermore an essentially accurate positioning of the product carrier in the system is possible.

The advantages of the frictionless blocking of a product carrier 20 on the conveying elements as described above will now be explained in more detail with reference to Figures 1, 2, 3 and 4.

In order to prevent stoppages or delays in the conveying circuit, the product in question is removed from the main supply line 2 for each operation and transported to a processing station, where the operation in question is carried out. After said operation, the product carrier carrying the product is returned to the main supply line 2. A technical solution for this is shown, for example, in European patents nos. 0 088 680 or 0 223 683.

Figure 1 shows a further conveyor 4, which forms part of a processing station (not shown). Conveyor 4 extends parallel to conveyors 2 and 3, spaced by some distance therefrom. Similarly to conveyors 2 and 3, conveyor 4 consists of two assemblies 4a and 4b, which each consist of an endless conveying element 7a(4) and 7b(4), which is passed over a number of guide rollers 6a(4), 6b(4), 6c(4). Also in this conveyor 4 the two endless conveying elements 7a(4) and 7b(4) can be driven by means of a motor 9(4) and a shaft 8(4) connected thereto. The direction of transport of said conveyor 4 is the same as that of conveyor 2, that is, from section A4 to section B4. See also arrows Y2, Y3, Y4, Y5 and Y5'.

In order to move a product carrier 20 that is present in section A2 to a processing station 4, conveyor 4 is connected to conveyor 2 by means of cross conveying units 5, 5'. Each cross conveying unit 5, 5' consists of two assemblies 5a, 5b, which are built up of an endless carrier 7a(5) and 7b(5), which runs over several rollers 6a(5), 6b(5), 6c(5) and 6d(5). Conveying elements 7a(5) and 7b(5) can be driven in a similar manner by means of a motor 9(5) and a shaft 8(5) connected thereto.

During the transfer of a product carrier to section A2 of conveyor 2 from section B2 of the conveyor 2' disposed there before, the data carrier 24b (see Figure 5c) is read by reading sensor 24a(2). If the data being read shows that the product that is present on said product carrier is to undergo an operation at processing station 4, the control system of the conveying system will cause the stop element 10(5) to move into the plane of transport, thus blocking the product carrier in section A2 in the above-described manner. During said blocking, the wheels 21 will turn without friction, thus protecting the conveying elements 7a(2) and 7b(2).

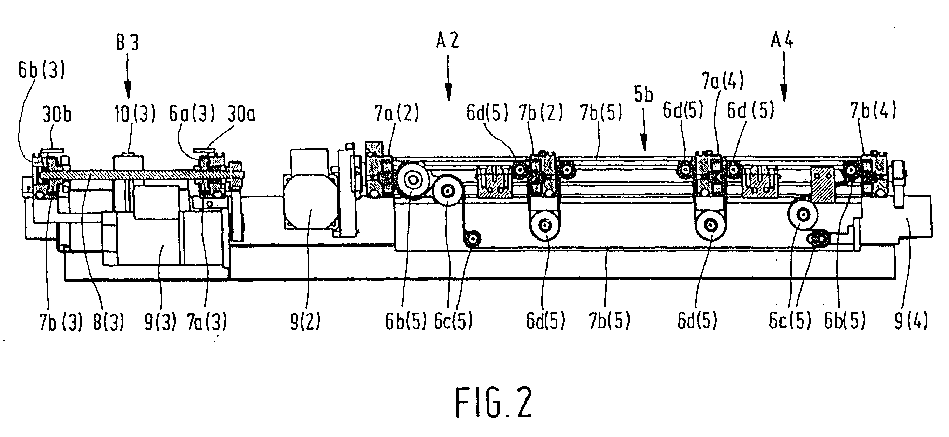

According to the invention, the cross conveying unit 5, which is disposed below the plane of transport of conveyors 2 and 4, can be moved in vertical direction, so that the plane of transport 5 formed by conveying elements 7a(5) and 7b(5) can be moved to a position above the plane of transport of conveyors 2 and 4. As a result, the product carrier which is being blocked by the stop element 10(5), but which continues to be supported on the conveying elements 7a(2) and 7b(2), is thus lifted from said conveying elements and will be supported on conveying elements 7a(5) and 7b(5). When said conveying elements 7a(5) and 7b(5) are driven, the product carrier 20 will move in transverse direction towards conveyor 4. Because conveying elements 7a(5) and 7b(5) are passed over additional rollers 6d(5) near conveying elements 7a and 7b of conveyors 2 and 4, the product carrier 20 can be transported over assemblies 2b and 4a. Also refer to the cross-sectional view of Figure 2.

Once the product carrier has reached section A4, the cross conveying unit 5 will move to a position below the plane of transport of conveyor 4, so that product carrier 20 will be supported on the two conveying elements 7a(4) and 7b(4). Then the product carrier is transported to the processing position of processing station 4, where the product that is present on the product carrier undergoes the operation in question, for example a test procedure.

During said operation, the product carrier must be blocked at a specific position on cross conveying units 5 and 5'. An arrangement for achieving this is shown in Figure 6b. Processing station 4 is fitted with a stop element 10 comprising a projection 10a and a pin 10b, whose operation has already been described, for the purpose of blocking a product carrier 20 in the direction of transport Y4. Stop element 10 is controlled by means of a sensor 17, which detects the passage of the product carrier. Once projection 10a and pin 10b engage round the upright edge 28 of slot 27a (see Figure 5c), thus blocking the further transport of the product carrier 20, the operation in the processing station 4 can be carried out. In this position, the continuously driven conveying elements 7a(4) and 7b(4) do not experience any friction with the stationary product carrier, since they drive the wheels 21 without any friction.

In the case of processing requiring a prolonged period of time, for example half a minute, the product carrier 20 can be lifted from the conveying elements temporarily, as a precautionary measure to protect the two conveying elements 7a(4) and 7b(4), by means of a supporting plate 30 which can be moved into and out of the plane of transport 4. Said supporting plate includes two projections 30a and 30b, which extend into corresponding holes 25a and 25b of the product carrier 20 when said plate is being moved upwards. Thus the product carrier and the product present thereon are properly positioned and fixed in said position in the processing station. A complete fixation, in order for the operation to be carried out in the processing station 4, can be obtained in that the upper surface 20' of the product carrier will abut against the projections 31a - 31d when the supporting plate is moved upwards, as a result of which it is completely clamped down. In this way the product carrier 20 is completely clear of the continuously driven conveying elements 7a(4) and 7b(4), as a result of which the life of the conveying elements is significantly extended.

After the operation, the supporting plate 30 returns to a position below plane of transport 4 again, so that the product carrier 20 will be supported on the two conveying elements 7a(4) and 7b(4) again, albeit still in a position in which it is blocked by stop element 10. The wheels 21 are driven without friction again by the conveying elements. Product carrier 20 is released by moving the stop element 10 to a position below plane of transport 4, after which product carrier 20 will be moved to section B4. At said section, the product carrier is blocked by the stop element 10'(4).

By moving the cross conveying unit 5' up in a similar manner, the product carrier will be supported on conveying elements 6a(5') and 6b(5'), after which said conveying elements will move the product carrier to section B2 of conveyor 2 over assemblies 4a and 2b. Once the cross conveying unit 5' has been moved to a position below the plane of transport of conveyor 2, the product carrier will be supported on conveying elements 6a(2) and 6b(2) again, in which position it may or may not be blocked by the stop element 10(5'). After being released, the product carrier will leave section B2 and move towards section A2' of a next conveying unit, which may include another processing station.

Thus the conveying circuit may consist of several linked-up conveying units, as is shown in Figure 1. Each product carrier 20 carrying a product is transported through said conveying circuit in the above-described manner, until the product present on said carrier has undergone all the necessary operations. As already mentioned before, the conveying and processing history of the product carrier and the product is recorded in data carrier 24b, which can be read and updated by the varying reading sensors 24a.

If it appears upon reading of the data carrier 24b by the reading sensor 24a'(4) at the location of section B4 that the blocked product is to undergo its next operation in the directly adjacent processing station 4', the control of the conveying system can transfer the product carrier 20 directly from section 84 to section A4' of the adjacent conveyor 4'. This results in a considerable gain of time, since there is no need for the product carrier to be transported to section B2 of conveyor 2 first by cross conveying unit 5', then to section A2' of the nearby conveyor 2' and subsequently to processing station 4' by a cross conveying unit 5. Furthermore, the direct transfer of a product carrier from section B4 of processing station 4 to section A4 of the directly adjacent processing station 4' does not interfere with the passage of the other product carriers over main supply conveyor 2.

When a product carrier is transported in transverse direction from section B4 to section B2 by cross conveying unit 5', the product carriers that may be present on conveying elements 7a(2) and 7b(2) of conveyor 2 must be blocked by the stop element 10(2). The product carriers that may come behind said product carrier will be stopped by the blocked product carrier via the damping means 23. As already mentioned before, the wheels 21 of all the product carriers being blocked are driven by the conveying elements 7a(2) and 7b(20.

In order to achieve an optimum utilization of the working area, or in order to obtain a conveying system of limited overall dimensions, it is possible to dispose a processing station 4 parallel to the return conveyor 3, wherein the conveyor 4 of said processing station is connected to the conveyor 3 in a similar manner by means of cross conveying units 5 and 5'.

Figure 3 shows another conveying unit, which only includes one supply conveyor 2 and one return conveyor 3. The two conveyors 2 and 3 are connected by means of two cross conveying units 5 and 5', which function in an identical manner as in Figure 1. Arrows Y2, Y3, Y5 and Y5' indicate the direction of transport of the various conveyors 2, 3, 5, 5'. The conveying unit which is shown in Figure 3 is preferably incorporated into the conveying system at a position halfway the conveying circuit; its presence obviates the need to transport a product carrier an unnecessarily long and thus time-consuming distance through the conveying system. In other words, the transport of a product carrier can be reduced considerably, for example if it appears upon reading of the data carrier 24b by the various reading sensors 24a that the product has already undergone all the required operations or that it is (has become) defective and consequently must be carried out of the system, or that the product still needs to undergo an operation at the beginning of the conveying circuit and must travel through the rest of the conveying circuit unnecessarily for this purpose. With this conveying unit it is possible, therefore, to have a product carrier with a product present thereon take a shortcut.

In order to maintain the orientation of the product carrier with respect to the system, each cross conveying unit 5, 5' includes means which are capable of picking up a product carrier and rotate it, preferably through 180°. A product carrier which is blocked by the stop element 10(2) in section A2 is moved to a position above conveying elements 7a(5) and 7b(5) after the cross conveying unit 5 has been moved upwards. Stop element 10(5) has likewise been moved up into the plane of transport 5, whereby it extends into slot 27b of product carrier 20. Further transport of the product carrier is stopped at the location of supporting plate 11(5), in that projection 10a of stop element 10(5) will come to abut against the stop edge 29 of slot 27b. When supporting plate 11(5) is moved upwards further, upright pins 11a and 11b will extend into the corresponding openings 25a and 25 of product carrier 20, thus ensuring a proper fixation during rotation.

After said rotation through 180°, supporting plate 11 will move to a position below the plane of transport 5, after which product carrier 20 will again be supported on conveying elements 7a(5) and 7b(5). After being released by the stop element 10(5), the rotated product carrier will move to section B3 of conveyor 3, whereupon it will be moved back into the conveying system in direction Y3. The possible presence of any product carriers 20 on conveyor 3 is detected by sensors 17(3) and 17'(3) and said product carriers will be stopped by the stop element 10(3) until section B3 is released again. Cross conveying unit 5' operates in a similar manner, albeit that in this case transport takes place from conveyor 3 to conveyor 2.

It is also possible for rotating means 11 to be mounted at the location of a processing station 4, as is shown in Figures 1 and 6b, for example for rotating the product carrier through an angle of 90°, in order to provide easier access to the product so as to enable the operating personnel to carrying out an operation thereon.

Figure 4 shows a conveying unit wherein the direction of transport Y describes a bend, which unit functions to connect conveyor 2 to conveyor 3. Section B2 of Figure 1 thereby connects to section A of Figure 4, whilst section B of Figure 4 connects to section A3 of conveyor 3, as is shown in Figure 1. The conveying unit that is shown in Figure 4 includes two conveying elements 7a and 7b in the form of a belt of plastic material. The two belts 7a and 7b are passed over several rollers 6a, 6b and 6c, and in the bend they are guided by a large number of rollers 16a and 16b, whose axes of rotation extend perpendicularly to the plane of transport 15. In order to prevent the occurrence of friction between product carrier 20 and plane of transport 15, the corner wheels 22 of the product carrier 20 come into contact with the upright edges 15a and 15b of the plane of transport during transport. Thus the product carrier 20 is guided through the bend in an efficient manner.

Another highly efficient manner of slowing down the product carriers 20 during their transport over conveying elements 7a and 7b, without having to adapt the manner in which the conveying elements are driven by motor 9, is shown in Figures 1 and 2 at the location of the conveyors. Said decelerating means consist of two strips 30a and 30b, which are mounted just above conveying elements 7a(3) and 7b(3) along a certain length. Upon passage of a product carrier, strips 30a and 30b come into contact with the upper wheel surface of wheels 21, as a result of which said wheels will experience an opposing force. This causes the speed of the product carrier to be reduced by half. This arrangement is quite suitable for use with sensitive products, such as electronic circuits. In addition to that, strips 30a and 30b may be movable in a known manner with respect to the conveying elements, so that the strips can be moved towards conveying elements 7a and 7b in case of a serious congestion so as to reduce the speed of all product carriers temporarily.

## Claims

1. A system for conveying one or more products on product carriers to and from one or more processing stations which are each suitable for subjecting said products to one or more different, predetermined operations, such as assembling, testing and the like, which stations are incorporated in a conveying circuit which is built up of linked-up conveying units, which each include a conveyor comprising at least one assembly built up in part of an endless conveying element which is passed over spaced-apart, drivable rollers, over which conveying element the product carriers can be transported by means of friction, **characterized in that** said product carrier is fitted with means which reduce the amount of friction between the product carrier and the conveying element during operation.

2. A system according to claim 1, **characterized in that** said means are mounted at those places where the product carrier is supported on the conveying element.

3. A system according to claim 1 or 2, **characterized in that**, seen in the direction of transport, said means are mounted in the side edges of the product carrier.

4. A system according to any one or more of the preceding claims, **characterized in that**, seen in the direction of transport, said means are mounted in the front edge and in the rear edge of the product carrier.

5. A system according to any one or more of the claims 1 - 4, **characterized in that** said means are wheels.

6. A system according to claim 5, **characterized in that** the wheel surface of each wheel extends above the product carrier surface remote from the conveying element.

7. A system according to claim 5 or 6, **characterized in that** an endless conveying element is passed over said wheels.

8. A system according to any one or more of the preceding claims 1 - 4, **characterized in that** said means consist of balls which are freely movable in a bearing housing.

9. A system according to any one or more of the preceding claims, **characterized in that** the product carrier is fitted with a further wheel near each corner point, which wheel extends beyond said corner point, wherein the axis of rotation of said wheel extends perpendicularly to the plane of the product carrier.

10. A system according to any one or more of the preceding claims, **characterized in that** at least one conveying unit includes means for at least slowing down a passing product carrier.

11. A system according to claim 10, **characterized in that** said means comprise at least one stop element fitted with a projection, which projection can move into and out of the plane of transport.

12. A system according to claim 11, **characterized in that** said projection extends into a slot formed in a side of the product carrier that faces towards the conveying element, which slot includes an upright edge.

13. A system according to claim 12, **characterized in that** said stop element is also fitted with a pin positioned before said projection, seen in the direction of transport, which pin can be moved into and out of the plane of transport simultaneously with said projection.

14. A system according to claim 13, **characterized in that** said projection is movable against a rebound force.

15. A system according to claim 11, **characterized in that** said projection extends into an opening formed in a side of the product carrier that faces towards the conveying element.

16. A system according to any one or more of the preceding claims 10 - 15, **characterized in that** said means furthermore comprise at least two strip-shaped elements extending in the direction of transport of the product carrier, which elements can be moved into contact with the wheel or ball surfaces that extend above the surface of the product carrier remote from the conveying element during operation.

17. A system according to claim 16, **characterized in that** said strip-shaped elements are each mounted just above a conveying element.

18. A system according to any one or more of the preceding claims, wherein said conveying circuit includes at least one conveying unit which is suitable for moving a product carrier in a direction transversely to its previous direction of transport, **characterized in that** the plane of transport of said cross transport unit partially lies below the plane of transport of the directly adjacent transport unit, and **in that** said plane of transport can be moved to a level above said latter plane of transport.

19. A system according to claim 18, **characterized in that** the conveying element of the cross conveying unit is passed over additional guide rollers under the conveying element of the directly adjacent conveying unit at said conveying element.

20. A system according to any one or more of the preceding claims, **characterized in that** at least one conveying unit furthermore comprises means for rotating the product carrier.

21. A system according to claim 20, **characterized in that** said rotating means consist of a rotatable support, which can be moved into an out of the plane of transport of said conveying element.

22. A system according to claim 20 or 21, **characterized in that** said rotatable support includes at least two upright pins, which extend into openings or slots formed in the side of the product carrier that faces towards the conveying element.

23. A system according to claim 20, 21 or 22, **characterized in that** said rotation preferably takes place through 90° or 180°.

24. A system according to any one or more of the preceding claims, **characterized in that** the conveying element of at least one conveying unit describes a bend in the plane of transport.

25. A system according to claim 24, **characterized in that** said conveying element runs over rollers disposed in the inside bend.

26. A system according to claim 24 or 25, **characterized in that** the inside and the outside bend of the plane of transport have upright edges, which co-operate with the wheels that are present in each corner of the product carrier.

27. A conveying unit as defined in claim 18 or 19.

28. A conveying unit as defined in any one or more of the claims 20 - 23.

29. A conveying unit as defined in any one or more of the claims 24 - 26.

30. A product carrier as defined in any one or more of the claims 1 - 9, 12, 15 or 22.
